# FASCICULE DE BREVET EUROPEEN

(11) **EP 2 897 828 B1**
(45) Date de publication et mention de la délivrance du brevet: **24.08.2016**
(21) Numéro de dépôt: 13789608.0
(22) Date de dépôt: 17.09.2013
(51) Int. Cl.: B60K 11/08

(54) **GUIDE D'AIR MODULAIRE PARTIELLEMENT EN MATÉRIAU ALVÉOLAIRE POUR SYSTÈME DE REFROIDISSEMENT D'UN MOTEUR DE VÉHICULE AUTOMOBILE**
MODULARE LUFTFÜHRUNG, TEILWEISE AUS EINEM WABENMATERIAL, FÜR EIN SYSTEM ZUR KÜHLUNG EINES KRAFTFAHRZEUGMOTORS
MODULAR AIR GUIDE MADE PARTIALLY FROM A HONEYCOMB MATERIAL FOR A SYSTEM FOR COOLING A MOTOR VEHICLE ENGINE

(30) Priorité: 20.09.2012 FR 1258835
(43) Date de publication de la demande: 29.07.2015
(73) Titulaire: Renault S.A.S., 92100 Boulogne-Billancourt (FR)
(72) Inventeur: SOLTOIAN, Serghei, F-91350 Grigny (FR); DUCHET-ANNEZ, Christophe, F-78000 Versailles (FR)
(86) Numéro de dépôt international: PCT/FR2013/052132
(87) Numéro de publication internationale: WO 2014/044962

(56) Documents cités:
- DE-A1- 19 849 035
- DE-A1-102007 024 898
- JP-A- 2001 080 371
- JP-A- 2008 120 369

## Description

La présente invention concerne un guide d'air placé au niveau de la face avant technique de moteur de véhicule automobile. Il s'agit de canaliser l'air pénétrant par au moins une ouverture ou grille d'aération dans la façade avant ou peau de bouclier avant du véhicule pour le conduire à un système de refroidissement constitué d'un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés ; la valise de refroidissement se compose classiquement du radiateur à eau de refroidissement moteur, du RAS optionnel (refroidissement de radiateur turbo) et du condenseur. Ce système de refroidissement est généralement situé au niveau de ce qu'on appelle dans le métier « face avant technique » (FAT), à savoir une structure qui se trouve en avant du bloc moteur et qui a pour fonction de supporter différents organes, principalement le radiateur du bloc moteur. La FAT peut prendre de multiples formes. Dans certains cas, elle se réduit à une simple poutre transversale. Dans d'autres cas, elle constitue un châssis de forme plus ou moins complexe intégrant la valise de refroidissement. Le document JP2008120369 décrit un guide d'air selon le préambule de la revendication 1.

On connaît par le document FR 2967375 un guide d'air destiné à être disposé devant un système de refroidissement prévu dans un compartiment moteur d'un véhicule, et derrière au moins une grille d'aération d'une façade avant du véhicule, le guide d'air étant sous forme d'une structure-cadre sensiblement rectangulaire chevauchant la poutre transversale de choc disposée à cet endroit du compartiment moteur, et à l'avant de cette structure-cadre, au moins un convergent attaché à ladite structure-cadre. La structure-cadre est avantageusement une partie commune à toute une gamme de modèles ayant une même architecture de moteur, alors que le convergent est une pièce spécifique au modèle considéré, destinée à s'adapter parfaitement à l'environnement du moteur.

Le but de l'invention est d'abaisser les coûts de production de ces guides d'air par une conception innovante.

L'invention atteint son but grâce à un guide d'air destiné à être disposé devant un système de refroidissement prévu dans un compartiment moteur d'un véhicule, et derrière au moins une grille d'aération d'une façade avant du véhicule, le guide d'air étant sous forme d'une structure-cadre sensiblement rectangulaire, avec, à l'avant de cette structure-cadre, au moins un convergent attaché à ladite structure-cadre, caractérisé en ce que le convergent est réalisé par des parois formées par découpage/pliage à partir d'une feuille de matière alvéolaire.

On appelle dans le contexte de ce document feuille de matière alvéolaire une feuille présentant une certaine rigidité du fait de sa constitution à partir d'une ou plusieurs feuilles minces de matière assemblées entre elles avec une couche de remplissage alvéolaire lié à la feuille ou aux feuilles. Un exemple typique de structure alvéolaire est le carton ondulé, à simple (une couche ondulée entre deux couches planes) ou double cannelure (deux couches ondulées et trois couches planes). Les matériaux visés dans l'invention sont plutôt des matières plastiques telles que le polypropylène, le polyéthylène, le polycarbonate, constitués en feuilles rigides et légères, facilement découpables et pliables. Ces matériaux se présentent sous forme d'ébauches planes de 1 à quelques millimètres d'épaisseur, avantageusement entre 2 et 5 mm, et sont faciles à travailler pour leur donner, par découpage et pliage, la forme adaptée.

Ainsi selon l'invention, on ne réalise par moulage que la partie de structure-cadre, commune à tous les véhicules de la gamme, tandis qu'on réalise à la demande, pour chaque modèle, le convergent à partir de simples feuilles découpées/pliées, assemblées entre elles pour former le convergent. Cette séparation dans la fabrication permet de baisser considérablement les coûts de production du guide d'air de l'invention, en réservant les techniques de fabrication relativement coûteuses (moulage) à une pièce produite en nombre et les techniques de fabrication bon marché (découpage/pliage de feuilles) aux pièces les moins standardisées.

Selon l'invention, le convergent comprend deux volets verticaux et deux volets horizontaux, qui sont assemblés les uns aux autres par des jeux de fentes prévus dans au moins certains des volets. Par exemple, les volets verticaux peuvent comprendre en haut et en bas des fentes qui permettent d'y introduire les bords des volets horizontaux.

Avantageusement, la structure-cadre comprend des moyens de réception et de fixation du convergent. Ceux-ci sont par exemple formés de créneaux dirigés orthogonalement par rapport au plan général de la structure-cadre et décalés sur le long des côtés de la structure-cadre pour définir entre eux un logement des bords des volets formant le convergent.

Avantageusement, certains des créneaux comportent des reliefs coopérant avec des reliefs complémentaires prévus sur les bords des volets, de manière à positionner et fixer lesdits bords dans lesdits moyens de réception.

Selon l'invention, le guide d'air chevauche une poutre transversale de choc (poutre Danner) disposée en général à cet endroit du compartiment moteur. Les volets verticaux comportent une découpe de passage de la poutre de choc située dans le compartiment moteur. La poutre de choc est généralement sous forme d'une poutre en U couché formant un canal ouvert, et la découpe des volets verticaux est associée à une patte à bords pliés qui peut venir occuper le canal ouvert de la poutre et assurer une certaine étanchéité à l'air à ce niveau.

Avantageusement, on prévoit sur la structure du compartiment moteur des butées pour positionner les parois du convergent ou limiter leurs déplacements éventuels. Ces éléments peuvent notamment prendre la forme d'une pièce formant des butées obliques sur la poutre de choc afin de positionner les volets verticaux du convergent, et d'autres pièces placées à l'extérieur du convergent et destinées à contrer la pression d'air sur le convergent en offrant un appui.

L'invention concerne également un agencement de compartiment moteur de véhicule situé entre une façade avant dotée d'au moins une ouverture d'aération et un système de refroidissement caractérisé en ce qu'il comporte un guide d'air sous la forme qui vient d'être décrite.

D'autres caractéristiques et avantages de l'invention ressortiront de la description suivante d'un exemple de réalisation. Il sera fait référence aux dessins annexés sur lesquels :
La figure 1 est une vue en perspective vue de l'avant du guide d'air conforme à l'invention.
La figure 2 est une vue de l'arrière du même guide d'air conforme à l'invention.
La figure 3 représente en perspective de trois-quarts avant le cadre seul du guide d'air de l'invention.
La figure 4 représente en perspective de trois-quarts arrière le même cadre du guide d'air de l'invention.
La figure 5 est une vue en perspective arrière du convergent de l'invention.
Les figures 6, 7, 8 et 9 montrent en perspective respectivement les quatre parois constitutives du convergent de la figure 5.
La figure 10 représente en perspective de trois-quarts arrière le même cadre et le convergent qui lui est fixé pour constituer le guide d'air de l'invention.
La figure 11 est une perspective vue de l'arrière montrant le détail de l'agencement des volets verticaux du convergent dans la poutre de choc.
La figure 12 est une perspective vue de l'avant montrant ce même agencement de la figure 11.

On a indiqué sur certaines figures le trièdre de référence XYZ du véhicule, X pointant vers la direction longitudinale arrière, Y la direction transversale et Z la direction verticale.

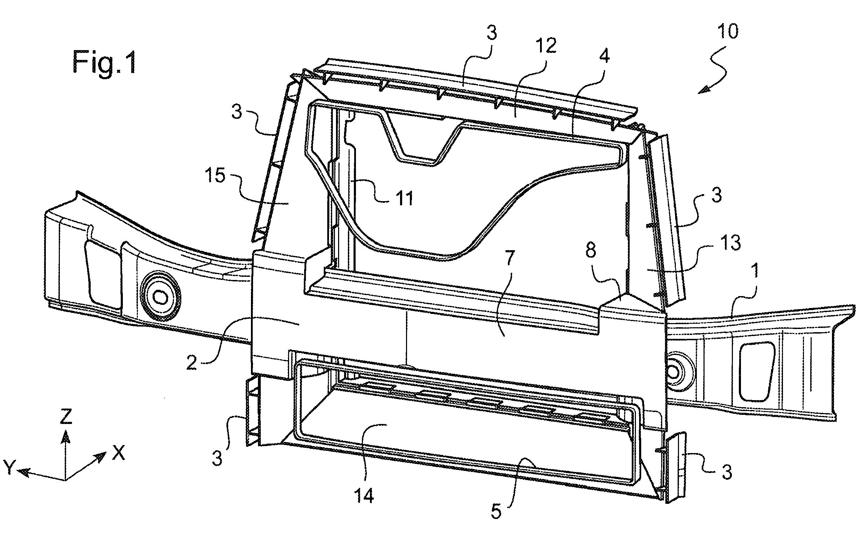

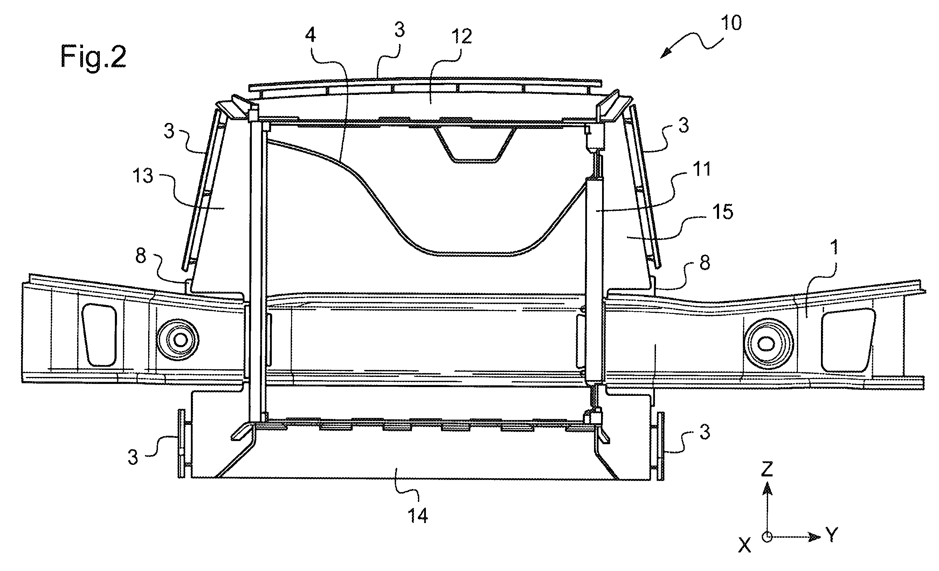

Les figures 1 et 2 montrent la poutre de choc 1 transversale et reliée de manière non représentée à des éléments structurels du châssis, en principe l'avant des longerons du véhicule, et à cheval sur laquelle est disposé le guide d'air 10 conforme à l'invention.

La poutre de choc 1 barre l'espace avant d'un radiateur vertical non représenté (élément principal du système de refroidissement) qui peut être fixé avec débattement sur une façade technique avant porteuse ou à une traverse inférieure (traverse sous radiateur) non représentées.

À l'avant de ces éléments, et non représenté, se trouve l'absorbeur de choc du bouclier avant du véhicule, dans lequel des ouvertures munies de grilles permettent l'entrée de l'air de refroidissement qui est ensuite dirigé vers le radiateur par le guide d'air 10.

Le guide d'air 10, objet de l'invention, est modulaire et constituée de deux parties distinctes : d'une part un cadre sensiblement rectangulaire en plastique moulé 11 et d'autre part un convergent formé par quatre volets 12, 13, 14, 15 venant se fixer sur les bords avant du cadre et réalisés en feuilles de matériau alvéolaire découpées/pliées..

On voit également sur la figure 1 une pièce de positionnement 2 se fixant sur la poutre 1 à sa partie avant, ainsi que des pièces annexes d'interface 3 disposées autour du convergent, ces pièces 3 étant fixées à des éléments structurels du compartiment moteur. Le rôle de ces pièces sera expliqué plus loin. Enfin, on voit dans les parties inférieure et supérieure du convergent 12-15 des cadres 4 et 5 de guidage intérieur (ces cadres sont une représentation schématique des fenêtres d'entrée d'air disposées en amont)..

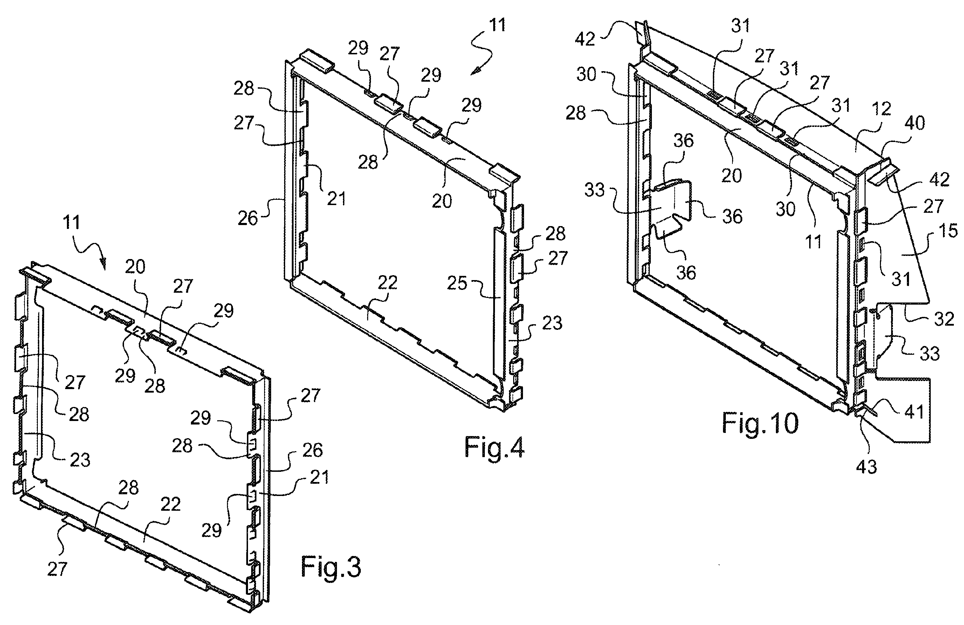

Le cadre rectangulaire 11 est représenté en détail sur les figures 3 et 4. Il constitue l'élément commun à tous les modèles d'une même gamme de véhicules. Il est en plastique moulé et constitué de deux montants verticaux 21, 23 et de deux côtés horizontaux 20, 22. Les éléments 20-23 sont sous forme de plaquettes étroites et allongées, qui présentent à l'arrière des formes 25, 26 leur permettant de s'insérer dans l'environnement sur lequel le cadre 11 doit être fixé (le système de refroidissement) et qui ne seront pas décrits ici. À l'avant, les bords des éléments 20-23 forment des moyens de réception et de fixation des parois du convergent 12-15. Plus précisément, les bords forment des créneaux alternés respectivement extérieur 27 et intérieur 28 ménageant entre eux un espace susceptible de recevoir un bord 30 de paroi 12-15 de convergent. Ces créneaux rigides 27, 28 sont, du fait de la matière plastique, légèrement élastiques et peuvent dans une certaine mesure s'écarter si nécessaire pour la mise en place de la paroi de convergent. Au moins l'un des créneaux 27, 28 peut comprendre un relief 29 destiner à s'insérer dans une découpe appropriée 31 d'un bord de paroi 12-15 comme on le verra plus loin. L'ensemble des créneaux et reliefs de maintien est réparti sur le cadre de manière à permettre un maintien correct des volets du convergent, et d'admettre une certaine dispersion dimensionnelle de celui-ci. De plus, la conception du cadre permet un démoulage en deux parties, donc demande un moule d'injection simple et sans tiroirs.

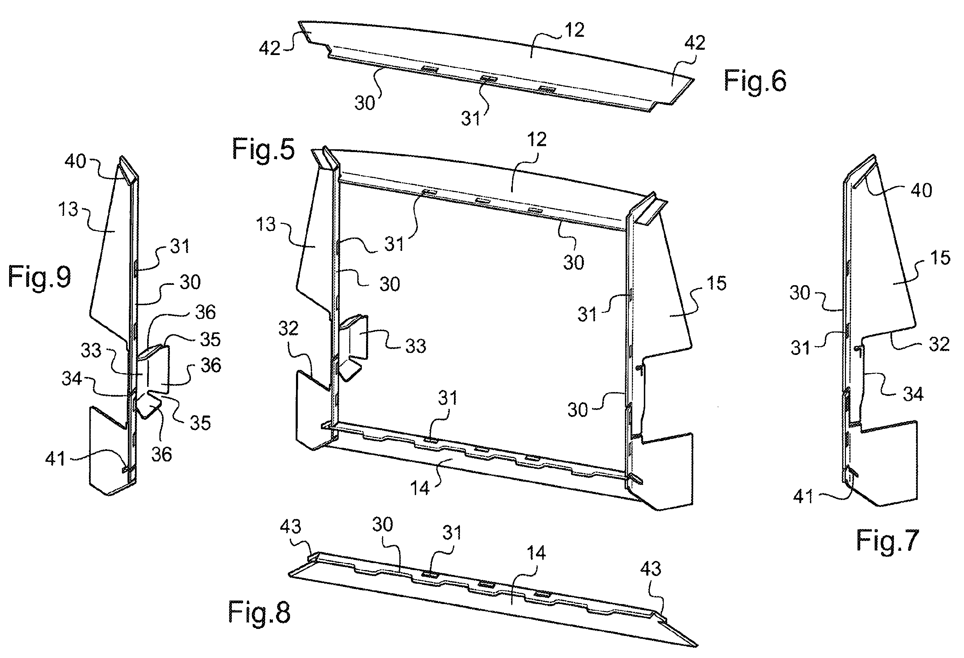

Les figures 5 à 9 illustrent la construction du convergent à partir des quatre volets 12-15. Les volets 12-15 sont adaptés spécifiquement à chaque modèle à l'intérieur de la gamme de véhicules qui partagent le même cadre 11. Chaque volet est formé d'une surface plane et comprend un bord arrière globalement rectiligne 30 destiné à coopérer avec les éléments de fixation du cadre 11. Le bord 30 comporte des découpes 31 destinées à coopérer avec les reliefs 29 des moyens de réception 27, 28 du cadre 11. On comprend donc qu'on peut introduire les bords 30 dans les moyens de réception 27, 28 du cadre 11 : les bords vont s'y trouver positionnés et fixés par l'engagement des reliefs 29 dans les découpes 31.

Les volets verticaux 13, 15 qui passent au niveau de la poutre 1 comprennent à mi-hauteur une découpe 32 permettant le passage de cette poutre. La découpe n'est pas complète et la partie découpée 33 est maintenue sur le volet par son bord vertical 34. La partie 33 découpée est aussi découpée dans deux angles 35 de manière à former par pliage des rabats 36 qui viennent coopérer avec l'intérieur de la poutre 1 comme on le verra plus loin.

Il est prévu dans le haut et le bas des deux volets verticaux 13, 15 deux fentes 40 et 41 partant respectivement de l'avant et de l'arrière du volet vertical 13, 15 et destinées à permettre l'insertion des bords 42 et 43 des volets horizontaux 12 et 14 par l'avant et par l'arrière. Il est ainsi possible d'assembler les quatre volets 12-15 de manière à former le convergent visible sur la figure 5.

Les volets 12-15 sont formés dans une feuille de matière alvéolaire, par exemple en polypropylène, par utilisation des techniques de découpe et de pliage.

La figure 10 montre l'association du convergent 12-15 au cadre 11. Les bords des volets 12-15 ont été engagés entre les créneaux 27, 28 des moyens de réception du cadre 11.

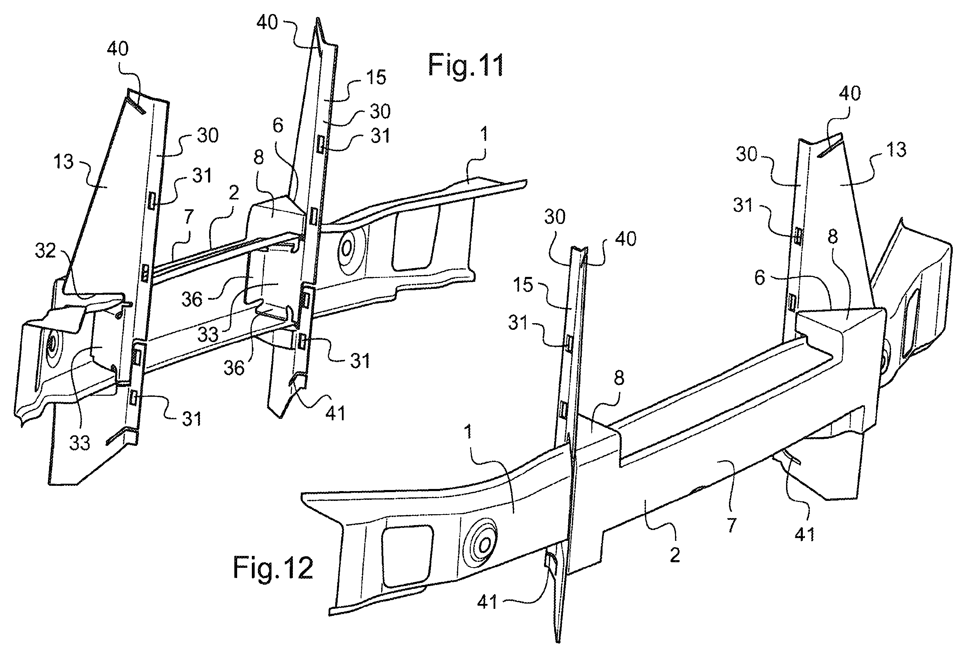

On voit sur les figures 11 et 12 l'agencement des volets verticaux 13, 15 du convergent au voisinage de la poutre de choc 1, laquelle a une section de profil en U avec des ailes horizontales dirigées vers l'arrière du véhicule. La pièce de positionnement 2 est en forme d'haltère, avec un corps central sous forme de plaque allongée 4 se terminant par deux sabots-étriers 5 qui viennent chevaucher la poutre 1 par l'avant et définissent deux faces d'extrémité latérale oblique 6, sur lesquelles viennent prendre appui les volets verticaux 13, 15 du convergent ; ceux-ci sont introduits sur la poutre 1 par l'arrière, ce qui est rendu possible par leur découpe 32 qui laisse le place à la poutre 1 ; la patte découpée 33, avec ses bords pliés élastiques 36, vient quant à elle occuper le canal intérieur de la poutre 1, la patte 33 prenant appui par ses bords 36 sur les trois parois du canal et formant de la sorte un barrage transversal dans ce canal.

Un des avantages de l'invention, lié à la fabrication du convergent tridimensionnel à partir de simples feuilles découpées/pliées, est que le volume de stockage nécessaire pour les matières constituant les convergents est très réduit. De plus, il n'y a pour la fabrication des convergents aucun investissement en outillages spécifiques très chers ni en moules d'injection complexes.

## Revendications

1. Guide d'air (10) destiné à être disposé devant un système de refroidissement prévu dans un compartiment moteur d'un véhicule, et derrière au moins une grille d'aération d'une façade avant du véhicule, le guide d'air étant sous forme d'une structure-cadre (11) sensiblement rectangulaire, avec, à l'avant de cette structure-cadre, au moins un convergent (12-15) attaché à ladite structure-cadre (11) et réalisé par des parois (12, 13, 14, 15) formées par découpage/pliage à partir d'une feuille de matière alvéolaire, le convergent (12-15) comprenant deux volets verticaux (13, 15) et le guide d'air (10) étant destiné à chevaucher une poutre transversale de choc (1) disposée dans le compartiment moteur du véhicule et sous forme d'une poutre en U couché formant un canal ouvert, les volets verticaux (13, 15) comportant une découpe (32) de passage de la poutre de choc, **caractérisé en ce que** le convergent comprend aussi deux volets horizontaux (12,14), **en ce que** les volets (12, 13, 14, 15) sont assemblés les uns aux autres par des jeux de fentes (40, 41) prévus dans au moins certains des volets, et **en ce que** la découpe (32) est associée à une patte (33) à bords pliés (36) qui peut venir occuper le canal ouvert de la poutre (1).

2. Guide d'air selon la revendication 1, **caractérisé en ce que** la feuille de matière alvéolaire est une feuille rigide et légère d'une matière plastique choisie parmi le polypropylène, le polyéthylène, le polycarbonate, constitués en feuilles rigides et légères, découpable et pliable.

3. Guide d'air selon l'une quelconque des revendications 1 ou 2, **caractérisé en ce que** la structure-cadre (11) est réalisée par moulage d'une matière plastique.

4. Guide d'air selon l'une quelconque des revendications 1 à 3, **caractérisé en ce que** la structure-cadre (11) comprend des moyens (27, 28) de réception et de fixation du convergent (12-15).

5. Guide d'air selon la revendication 4, **caractérisé en ce que** les moyens de réception sont par exemple formés de créneaux (27, 28) dirigés orthogonalement par rapport à la structure-cadre (11) et décalés sur le long des côtés de la structure-cadre (11) pour définir entre eux un logement des bords (30) des volets (12, 13, 14, 15) formant le convergent.

6. Guide d'air selon la revendication 5, **caractérisé en ce que** certains des créneaux (27, 28) comportent des reliefs (29) coopérant avec des reliefs complémentaires (31) prévus sur les bords (30) des volets, de manière à positionner et fixer lesdits bords (30) dans lesdits moyens de réception.

7. Agencement de compartiment moteur de véhicule situé entre une façade avant dotée d'au moins une ouverture d'aération et un système de refroidissement **caractérisé en ce qu'**il comporte un guide d'air selon l'une quelconque des revendications 1 à 6.

## Patentansprüche

1. Luftführung (10), die dazu vorgesehen ist, vor einem Kühlungssystem, das in einem Motorraum eines Fahrzeugs vorgesehen ist, und hinter wenigstens einem Lüftungsgitter einer Vorderfront des Fahrzeugs angeordnet zu werden, wobei die Luftführung die Form einer im Wesentlichen rechtwinkligen Rahmenstruktur (11) hat, wobei vor dieser Rahmenstruktur wenigstens ein Zusammenführungsorgan (12-15) vorgesehen ist, das an der Rahmenstruktur (11) befestigt ist und durch Wände (12, 13, 14, 15) verwirklicht ist, die durch Ausschneiden/Biegen einer Lage aus Wabenmaterial gebildet sind, wobei das Zusammenführungsorgan (12-15) zwei vertikale Klappen (13, 15) umfasst und wobei die Luftführung (10) dazu bestimmt ist, einen transversalen Stoßträger (1), der in dem Motorraum des Fahrzeugs angeordnet ist und die Form eines beschichteten U-Trägers hat, der einen offenen Kanal bildet, zu überspannen, wobei die vertikalen Klappen (13, 15) einen Ausschnitt (32) für den Durchgang des Stoßträgers aufweisen, **dadurch gekennzeichnet, dass** das Zusammenführungsorgan außerdem zwei horizontale Klappen (12, 14) umfasst, dass die Klappen (12, 13, 14, 15) durch Gruppen von Schlitzen (40, 41), die wenigstens in bestimmten der Klappen vorgesehen sind, miteinander zusammengefügt sind und dass dem Ausschnitt (32) eine Lasche (33) mit umgebogenen Rändern (36) zugeordnet ist, die in dem offenen Kanal des Trägers (1) angeordnet werden kann.

2. Luftführung nach Anspruch 1, **dadurch gekennzeichnet, dass** die Lage aus Wabenmaterial eine starre und leichte Lage aus einem Kunststoff ist, der gewählt ist aus Polypropylen, Polyethylen, Polycarbonat und aus starren und leichten Lagen, die ausgeschnitten und gebogen werden können, gebildet ist.

3. Luftführung nach einem der Ansprüche 1 oder 2, **dadurch gekennzeichnet, dass** die Rahmenstruktur (11) durch Formen eines Kunststoffs verwirklicht ist.

4. Luftführung nach einem der Ansprüche 1 bis 3, **dadurch gekennzeichnet, dass** die Rahmenstruktur (11) Mittel (27, 28) für die Aufnahme und die Befestigung des Zusammenführungsorgans (12-15) umfasst.

5. Luftführung nach Anspruch 4, **dadurch gekennzeichnet, dass** die Aufnahmemittel beispielsweise aus Zacken (27, 28) gebildet sind, die senkrecht zu der Rahmenstruktur (11) orientiert sind und längs der Seiten der Rahmenstruktur (11) versetzt sind, um untereinander einen Aufnahmeraum für Ränder (30) der Klappen (12, 13, 14, 15), die das Zusammenführungsorgan bilden, zu definieren.

6. Luftführung nach Anspruch 5, **dadurch gekennzeichnet, dass** bestimmte der Zacken (27, 28) Reliefs (29) aufweisen, die mit komplementären Reliefs (31) zusammenwirken, die in den Rändern (30) der Klappen vorgesehen sind, derart, dass die Ränder (30) in den Aufnahmemitteln positioniert und befestigt sind.

7. Fahrzeugmotorraum-Anordnung, die sich zwischen einer mit wenigstens einer Belüftungsöffnung versehenen Vorderfront und einem Kühlungssystem befindet, **dadurch gekennzeichnet, dass** sie eine Luftführung nach einem der Ansprüche 1 bis 6 umfasst.

## Claims

1. Air guide (10) intended to be arranged in front of a cooling system provided in an engine compartment of a vehicle and behind at least one ventilation grille of a front end of the vehicle, the air guide being in the form of a substantially rectangular frame structure (11) with, at the front of this frame structure, at least one diffuser (12-15) attached to said frame structure (11) and realized by walls (12, 13, 14, 15) formed by cutting/bending a sheet of honeycomb material, the diffuser (12-15) comprising two vertical dampers (13, 15) and the air guide (10) being intended to overlap with a crash cross-beam (1) disposed in the engine compartment of the vehicle and in the form of a recumbent U-shaped member forming an open channel, the vertical dampers (13, 15) including a cutout (32) for the crash member to pass through, **characterized in that** the diffuser also comprises two horizontal dampers (12, 14), **in that** the dampers (12, 13, 14, 15) are assembled with one another by sets of slits (40, 41) provided in at least certain dampers, and **in that** the cutout (32) is associated with a foot (33) with bent edges (36) which may occupy the open channel of the member (1).

2. Air guide according to Claim 1, **characterized in that** the sheet of honeycomb material is a light, rigid sheet made of a plastics material chosen from polypropylene, polyethylene, polycarbonate, formed in light, rigid sheets that are easy to cut and bend.

3. Air guide according to either of Claims 1 and 2, **characterized in that** the frame structure (11) is realized by molding a plastics material.

4. Air guide according to any one of Claims 1 to 3, **characterized in that** the frame structure (11) comprises means (27, 28) for receiving and fixing the diffuser (12-15).

5. Air guide according to Claim 4, **characterized in that** the receiving means are, for example, formed by slots (27, 28) directed orthogonally in respect of the frame structure (11) and staggered along the sides of the frame structure (11) to define between them a housing of the edges (30) of the dampers (12, 13, 14, 15) forming the diffuser.

6. Air guide according to Claim 5, **characterized in that** some of the slots (27, 28) include raised areas (29) engaging with complementary raised areas (31) provided on the edges (30) of the dampers in such a manner as to position and fix said edges (30) in said receiving means.

7. Vehicle engine compartment layout situated between a front face provided with at least one ventilation opening and a cooling system, **characterized in that** it comprises an air guide according to any of Claims 1 to 6.
